(19) Europäisches Patentamt
European Patent Office
Office européen des brevets

(11) **EP 2 353 055 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(21) Anmeldenummer: **09759947.6**

(22) Anmeldetag: **25.11.2009**

(51) Int Cl.:
**G05D 23/24** *(2006.01)*    **G05D 23/19** *(2006.01)*

(86) Internationale Anmeldenummer:
**PCT/EP2009/065844**

(87) Internationale Veröffentlichungsnummer:
**WO 2010/063629 (10.06.2010 Gazette 2010/23)**

(54) **VERFAHREN UND HEIZSYSTEM ZUM BEHEIZEN EINES FLUID-LEITUNGSSYSTEMS INSBESONDERE IN EINEM KRAFTFAHRZEUG**

METHOD AND HEATING SYSTEM FOR HEATING A FLUID LINE SYSTEM, PARTICULARLY IN A MOTOR VEHICLE

PROCÉDÉ ET SYSTÈME DE CHAUFFAGE POUR CHAUFFER UN SYSTÈME DE CONDUITE DE FLUIDE, EN PARTICULIER DANS UN VÉHICULE AUTOMOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.12.2008 DE 102008059751**

(43) Veröffentlichungstag der Anmeldung:
**10.08.2011 Patentblatt 2011/32**

(73) Patentinhaber: **Voss Automotive GmbH**
**51688 Wipperfürth (DE)**

(72) Erfinder:
• **ETSCHEID, Tobias**
**51789 Lindlar (DE)**

• **BORGMEIER, Olav**
**42499 Hückeswagen (DE)**
• **SCHÜLER, Thomas**
**58300 Wetter (DE)**

(74) Vertreter: **Patentanwälte**
**Dr. Solf & Zapf**
**Schlossbleiche 20**
**D-42103 Wuppertal (DE)**

(56) Entgegenhaltungen:
**DE-A1- 3 139 199     DE-A1- 4 022 759**
**DE-C1- 4 034 635     GB-A- 2 154 813**

**Beschreibung**

Die vorliegende Erfindung betrifft zunächst gemäβ dem Oberbegriff des Anspruchs 1 ein Verfahren zum Beheizen eines Fluid-Leitungssystems mit mindestens zwei elektrischen Heizelementen.

Femer betrifft die Erfindung auch gemäβ dem Oberbegriff des Anspruchs 6 ein Heizsystem für ein Fluid-Leitungssystem mit mindestens zwei elektrischen Heizelementen und insbesondere zur Anwendung des erfindungsgemäßen Verfahrens.

Zum Stand der Technik sei beispielhaft auf die Dokumente DE 41 35 082 C1, WO 2007/073286 A1, EP 1 985 908 A1 sowie EP 1 764 541 A1 verwiesen.

Beheizbare Fluid-Leitungssysteme werden häufig insbesondere in Kraftfahrzeugen eingesetzt, und zwar für solche Medien, die aufgrund ihres Gefrierpunktes bereits bei relativ hohen Umgebungstemperaturen zum Gefrieren neigen. Dadurch können bestimmte Funktionen beeinträchtigt werden. Dies ist beispielsweise bei Wasserleitungen für die Scheibenwaschanlage der Fall, insbesondere aber auch bei Leitungen für eine wässrige Hamstofflösung, die als $NO_x$-Reduktionsadditiv für Dieselmotoren mit so genannten SCR-Katalysatoren eingesetzt wird. Deshalb können bei niedrigen Temperaturen die elektrischen Heizelemente aktiviert werden, um das Gefrieren zu vermeiden oder um das bereits gefrorene Medium aufzutauen.

Solche Fluid-Leitungssysteme bestehen in der Regel - vgl. insbesondere EP 1 985 908 A1 (Fig. 13, 14) sowie auch WO 2007/073286 A1 - aus mindestens einer Fluidleitung (Rohr- oder Schlauchleitung) mit zwei endseitigen Leitungsverbindern (Steckverbindem). Die Fluidleitung weist ein elektrisches Heizelement in Form einer z. B. schraubenlinienförmig über die Leitungslänge verlaufenden Heizdraht-Bewicklung auf, und zumindest einer der Leitungsverbinder (WO 2007/073286 A1) bzw. jeder der beiden Verbinder (EP 1 985 908 A1) ist ebenfalls mit einem elektrischen Heizelement insbesondere in Form einer Heizdraht-Bewicklung ausgerüstet. Üblicherweise sind alle Heizelemente elektrisch in Reihe geschaltet und mit einer gemeinsamen Strom- bzw. Spannungsversorgung verbindbar (vgl. dazu insbesondere EP 1 985 908 A1, Fig. 14a, 14b). Daraus ergibt sich das Problem, dass die einzelnen Heizelemente bezüglich ihrer Heizleistung speziell für das jeweilige Leitungssystem ausgelegt werden müssen, und zwar insbesondere in Anpassung an die Länge der jeweiligen Fluidleitung. Dies führt zu einem großen Aufwand für eine Bereitstellung von verschiedenen Ausführungsvarianten.

Das Dokument EP 1 764 541 A1 beschreibt eine beheizbare Fluidleitung, bei der am Umfang des Leitungsrohres mindestens ein elektrischer Heizleiter und mindestens zwei elektrische Versorgungsleitungen in Längsrichtung des Leitungsrohres verlaufend angeordnet sind, wobei der Heizleiter alternierend mit einer der beiden Stromversorgungsleitungen elektrisch verbunden ist, und zwar alternierend am Pluspol und Minuspol der Versorgungsspannung. Hierbei liegen die Verbindungsstellen in Längsrichtung des Leitungsrohrs gesehen in gleichen Abständen hintereinander. Die Verbindung des elektrischen Heizleiters mit den Versorgungsleitungen erfolgt z. B. durch Löten, Schweißen oder Crimpen. Durch diese Ausgestaltung besitzt die Fluidleitung eine konstante Heizleistung pro Längeneinheit. Hierdurch kann die Fluidleitung in großen Längen vorgefertigt und in beliebiger Länge abgelängt werden, wobei jede abgelängte Leitungslänge pro Längeneinheit die gleiche Heizleistung aufweist. Diese bekannte Fluidleitung hat jedoch den Nachteil, dass sich relativ hohe Materialkosten ergeben, da zusätzlich zu dem elektrischen Heizleiter oder den Heizleitern mindestens jeweils zwei Versorgungsleitungen mitgeführt werden müssen. Auch ergibt sich bei der Herstellung ein erhöhter Herstellungsaufwand durch die notwendigen alternierenden Verbindungsstellen zwischen dem Heizleiter und den Versorgungsleitungen. Jede derartig vorgefertigte beheizbare Fluidleitung besitzt eine festgelegte Heizleistung pro Längeneinheit. Sind aber unterschiedliche Heizleistungen pro Längeneinheit für unterschiedliche Anwendungsfälle erforderlich, ist eine Vorfertigung von verschiedenen beheizbaren Fluidleitungen mit den jeweils erforderlichen Heizleistungen pro Längeneinheit notwendig, so dass eine Bevorratung bzw. Lagerhaltung der vorgefertigten Fluidleitungen notwendig ist. Hieraus resultieren weiterhin erhöhte Herstellungskosten.

Das Dokument DE 40 34 635 C1 beschreibt ein Verfahren zum Betreiben eines elektrischen Durchlauferhitzers, wobei in einem Heizblock fünf Heizkörper in Sternschaltung an einem Stempunkt liegen und an drei Phasen eines Drehstromnetzes anschließbar sind. Mittels einer Steuereinrichtung können die Heizkörper in mehreren Heizleistungsstufen geschaltet werden.

Der vorliegenden Erfindung liegt die Aufgabe zu Grunde, die beschriebenen Nachteile zu vermeiden und dazu ein Verfahren und ein Heizsystem zum Beheizen eines Fluid-Leitungssystems zu schaffen, um auf einfache und besonders wirtschaftliche und sehr effektive Weise die elektrische Heizleistung weitgehend unabhängig von der Leitungslänge und der Anzahl von elektrischen Heizelementen optimieren zu können.

Erfindungsgemäß wird dies zunächst mit dem im Anspruch 1 definierten Verfahren erreicht, wobei die Heizelemente elektrisch parallel betrieben werden und jedes Heizelement separat mit einem zur Einstellung seiner Heizleistung gesteuerten, insbesondere geregelten Betriebsstrom versorgt wird. Dazu wird jedes Heizelement separat mit einer eigenen Betriebsspannung versorgt, wobei jede Betriebsspannung aus einer Versorgungsspannung insbesondere Gleichspannung einer Fahrzeug-Batterie durch eine zur Regelung der Heizleistung mit einem bestimmten Tastverhältnis getaktete PWM-Steuerung (Pulsweitenmodulation) erzeugt wird. Hierbei resultiert der jeweilige Betriebsstrom aus einem Effektivwert der getakteten, gepulsten Betriebsspannung und einem jeweils aktuellen, temperaturabhängigen Widerstand des Heizelementes.

Vorteilhafterweise kann dabei die jeweilige Ist-Heizleistung jedes Heizelementes über eine Leistungsregelung durch Variation des PWM-Tastverhältnisses auf eine vorgegebene Soll-Heizleistung geregelt werden.

Ein erfindungsgemäßes Heizsystem ist Gegenstand des unabhängigen Anspruchs 6, wonach die Heizelemente elektrisch parallel geschaltet und über jeweils ein separates Steuerglied einzeln zur individuellen Einstellung der Heizleistung steuerbar und insbesondere regelbar sind. Dazu werden die Steuerglieder von einer Reglereinheit zur Regelung der Heizleistungen der Heizelemente angesteuert.

Weitere vorteilhafte Ausgestaltungen der Erfindung sind in den abhängigen Ansprüchen und in der nachfolgenden Beschreibung enthalten.

Anhand der Zeichnungen soll die Erfindung beispielhaft genauer erläutert werden. Dabei zeigen:

Fig. 1   eine beispielhafte Ausführungsform eines elektrisch beheizbaren Fluid-Leitungssystems in einer Perspektivdarstellung mit einem Heizsystem mit drei zusätzlich schematisch als Schaltungssymbole eingezeichneten Heizelementen,

Fig. 2   ein schematisches Ersatzschaltbild des Leitungs- und Heizsystems nach Fig. 1,

Fig. 3   ein weiteres Schaltbild eines erfindungsgemäßen Heizsystems in einer vereinfachten Darstellung,

Fig. 4   ein Prinzipschaltbild zur Erläuterung der Ansteuerung der Heizelemente in Parallelschaltung,

Fig. 5   ein Blockschaltbild einer erfindungsgemäßen Reglereinheit,

Fig. 6   ein vereinfachtes Blockschaltbild zum Grundprinzip der Reglereinheit,

Fig. 7   eine schematische Blockdarstellung einer Treiberstufe,

Fig. 8   ein Schaltbild ähnlich Fig. 3 mit einer alternativen Beschaltung der vorhandenen Heizelemente und

Fig. 9   Diagramme zur Erläuterung der PWM-Modulation der Versorgungsspannung zur Erzeugung der modulierten Betriebsspannungen für die Heizelemente.

In den verschiedenen Zeichnungsfiguren sind gleiche Teile stets mit den gleichen Bezugszeichen versehen.

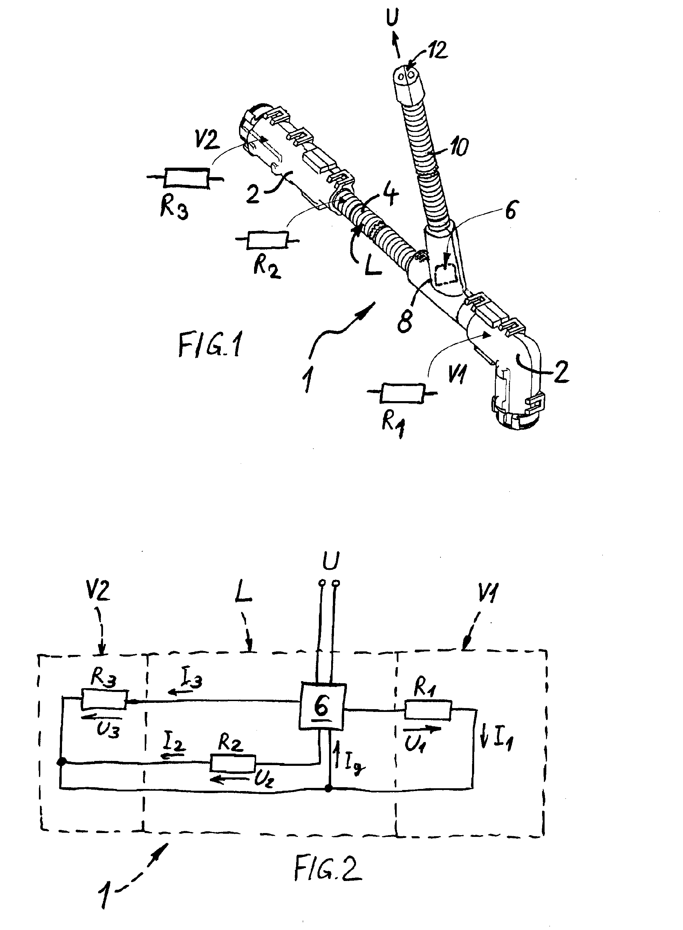

In Fig. 1 ist beispielhaft ein Fluid-Leitungssystem 1 dargestellt, welches aus einem Leitungssatz mit einer Fluidleitung L und zwei endseitigen Leitungsverbindern $V_1$ und $V_2$ sowie aus elektrischen Heizmitteln besteht. Als Heizmittel weist jeder Fluidverbinder $V_1$, $V_2$ ein elektrisches Heizelement $R_1$ bzw. $R_3$ auf, und die Fluidleitung L ist mit einem weiteren Heizelement $R_2$ ausgestattet. Alle Heizelemente (Heizwiderstände) können bevorzugt aus jeweils einer Heizdraht-Bewicklung bestehen. Es ist vorteilhaft, wenn die Heizelemente $R_1$, $R_3$ der Leitungsverbinder $V_1$, $V_2$ jeweils mit einem äußeren Gehäuse 2 umkapselt sind, und die Fluidleitung L weist einen äußeren, das Heizelement $R_2$ umgebenden Mantel 4, beispielsweise in Form eines Wellrohrs auf.

Innerhalb eines Fahrzeuges und bei der bevorzugten Anwendung für ein SCR-Katalysatorsystem bilden in der Regel mehrere einzelne Leitungssysteme 1 ein Gesamt-Leitungssystem, und zwar für die erforderlichen Fluid-Verbindungen zwischen einem Tank und einem Fördermodul (mit Vor- und Rücklauf) und zwischen dem Fördermodul und einer Dosiereinheit (als Einzelleitung oder auch mit Vor- und Rücklauf), wobei die Dosiereinheit das SCR-Reduktionsadditiv dosiert in einen Abgasstrang einbringt. Je nach Anordnung der zu verbindenden Aggregate innerhalb des jeweiligen Fahrzeuges können sehr unterschiedliche Längen der einzelnen Leitungen erforderlich sein, was auch einen Einfluss auf die Widerstände der jeweiligen Heizelemente und damit auch - bei vorgegebener Versorgungsspannung - auf deren Heizleistungen hat.

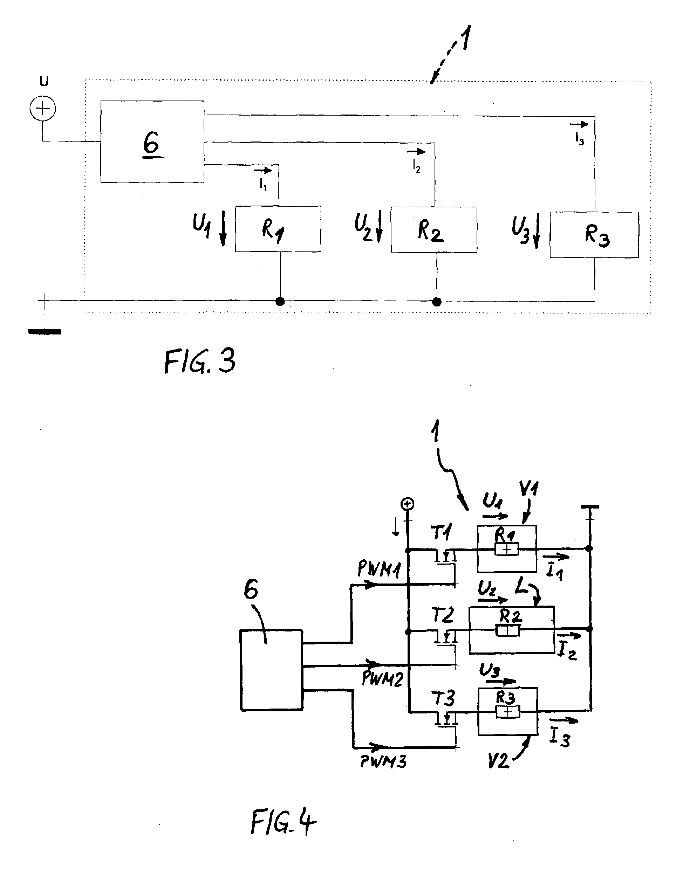

Deshalb ist gemäß Fig. 2 bis 4 erfindungsgemäß vorgesehen, dass die Heizelemente $R_1$, $R_2$, $R_3$ elektrisch parallel geschaltet und mit jeweils einem separaten, vorzugsweise von einem Transistor gebildeten Steuerglied $T_1$, $T_2$, $T_3$ (siehe Fig. 4) verbunden sind, wobei jedes Heizelement $R_1$, $R_2$, $R_3$ über sein zugehöriges Steuerglied $T_1$, $T_2$, $T_3$ zur individuellen Einstellung seiner Heizleistung steuerbar ist. Dadurch kann die Heizleistung konstant gehalten oder an bestimmte Bedingungen, wie insbesondere die jeweilige Außen- bzw. Umgebungstemperatur, angepasst werden, und zwar vorteilhafterweise individuell für jedes einzelne Heizelement des Leitungssystems 1. Zudem ist dadurch die Heizleistung unabhängig von der jeweiligen Betriebsspannung einstellbar. Bevorzugt sind die Steuerglieder $T_1$ bis $T_3$ zur Regelung der Heizleistungen der einzelnen Heizelemente $R_1$ bis $R_3$ jeweils separat, individuell von einer Reglereinheit 6 ansteuerbar, deren Regelgröße somit die jeweilige Heizleistung ist, indem die jeweilige tatsächliche Heizleistung als Istwert ermittelt und auf eine vorgegebene Soll-Heizleistung (Sollwert) geregelt wird. Als Sollwert kann somit jeweils eine bestimmte, zuvor unter Berücksichtigung bestimmter Parameter (wie z. B. Leitungslänge, Umgebungstemperatur und/oder dergleichen) ermittelte Heizleistung (P = U · I) konkret vorgegeben werden. Es ist aber auch möglich, als Sollwert eine andere physikalische Größe (z. B. geometrische Parameter, wie Material, Anzahl, Durchmesser und Länge der Heizleiter, die Außen- bzw. Umgebungstemperatur, Betriebstemperatur des SCR-Systems und/oder eine vorgegebene Auftauzeit) vorzugeben, wobei dieser Sollwert dann vom System selbsttätig zu einer Soll-Heizleistung bzw. zu einer effektiven Spannung transformiert wird.

Wie sich beispielhaft aus Fig. 1 ergibt, kann die Reglereinheit 6 innerhalb eines im Leitungsbereich angeordneten Anschlussgehäuses 8 untergebracht und über elektrische, in einem Mantel 10 (z. B. Wellrohr) verlaufende Anschlussleitungen und über Steckverbindungen 12 mit einer Versorgungsspannung U (s. dazu Fig. 2 und 3) verbindbar sein. Das Anschlussgehäuse 8 kann an jeder beliebigen Stelle der Fluidleitung L angeordnet sein, d. h. auch beabstandet von den Leitungsverbindern $V_1$, $V_2$. Die Reglereinheit 6 kann aber auch im Gehäuse 2 eines der Leitungsverbinder $V_1$, $V_2$ untergebracht sein.

Die erfindungsgemäße Regelung basiert in der Hauptsache auf einer PWM-Ansteuerung der Steuerglieder $T_1$ bis $T_3$, d. h. auf einer pulsweitenmodulierten Ansteuerung mit hinsichtlich ihrer zeitlichen Breite variablen Schaltimpulsen. Dazu wird eine Versorgungsspannung U, in einem Fahrzeug die Batteriespannung von z. B. 9 bis 16 V oder 20 bis 32 V, über die Steuerglieder $T_1$ bis $T_3$ getaktet auf die einzelnen Heizelemente $R_1$ bis $R_3$ geschaltet. Die Regelung erfolgt dabei durch Variation des so genannten Tastverhältnisses bzw. des Modulationsgrades m.

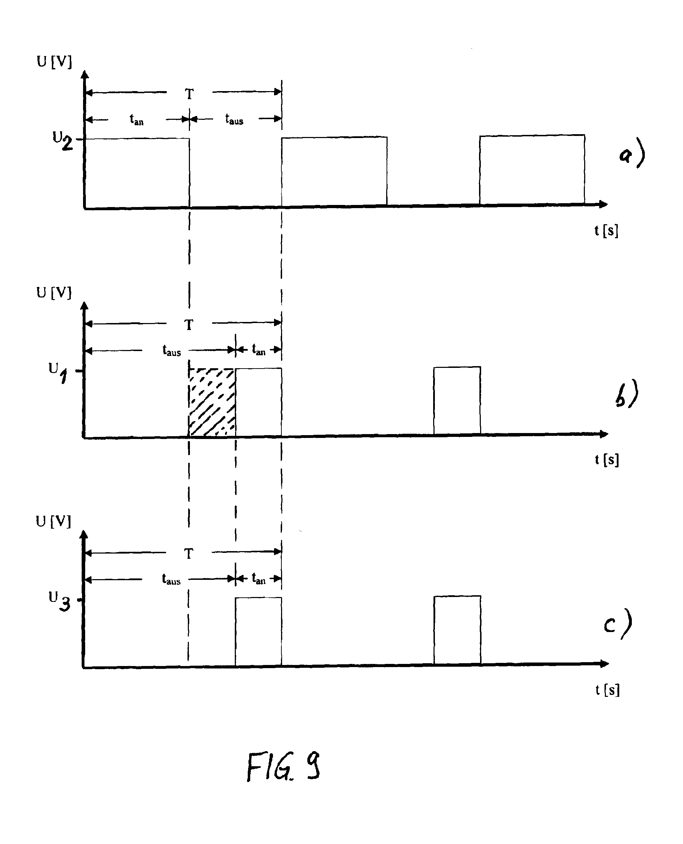

Dazu wird auf Fig. 9 verwiesen, wonach innerhalb einer Gesamt-Schaltperiode T ein Impuls mit einer variablen Einschaltzeit $t_{an}$ erzeugt wird. Die verbleibende Zeit ist als Ausschaltzeit mit $t_{aus}$ bezeichnet. Dabei ist das Tastverhältnis definiert durch:

$$m = \frac{t_{an}}{T}$$

Somit kann m einen Wert im Bereich von 0 bis 1 annehmen. Die so gebildeten Spannungsimpulse führen zu einem Effektivwert $U_{eff}$ = m · U, der somit in einem Bereich von 0 % bis 100 % der Versorgungsspannung U liegen kann.

Werden die Heizelemente $R_1$ bis $R_3$ nun mit der jeweiligen getakteten Betriebsspannung $U_1$, $U_2$, $U_3$ versorgt, so resultiert daraus - nach dem Ohm'schen Gesetz

$$I_{eff} = \frac{U_{eff}}{R}$$

-  ein effektiver Strom $I_1$ bis $I_3$ (vergleiche Fig. 3), der sich aus dem jeweiligen Effektivwert der Betriebsspannung dividiert durch den jeweils aktuellen, temperaturabhängigen Widerstand R(T) des jeweiligen Heizelementes $R_1$ bis $R_3$ ergibt. Für die Heizleistung des jeweiligen Heizelementes bedeutet dies:

$$P = m \cdot U \cdot I = m \cdot \frac{U^2}{R(T)} = m \cdot I^2 \cdot R(T)$$

Daraus ergeben sich für Spannung und Strom annähernd Rechteckimpulse mit jeweils nur zwei Zuständen, zeitweise volle Versorgungsspannung / voller Strom und zeitweise spannungs- /stromlos (Pausen).

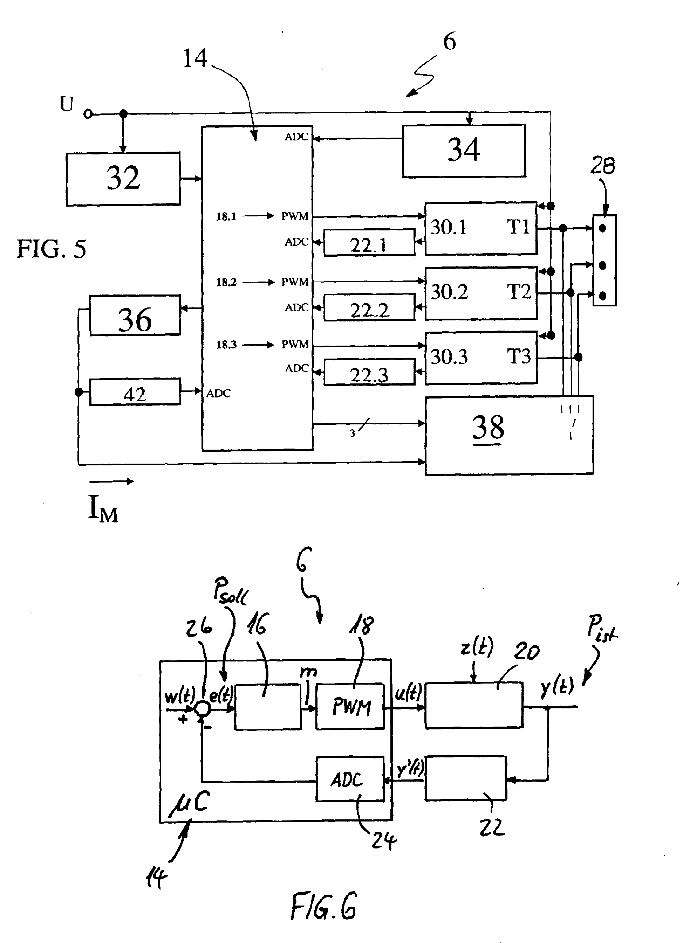

Das erfindungsgemäße Prinzip der Regelung ist in Fig. 6 vereinfacht dargestellt. Ein Mikrocontroller 14 ist in den Regelkreis integriert und enthält einen Regler 16 für das Tastverhältnis m eines PWM-Modulators 18, der eine Stellgröße u(t) für eine nachgeschaltete Regelstrecke 20 abgibt. Der Istwert am Ende der Regelstrecke 20 wird als Regelgröße y(t) über einen Sensor 22 abgegriffen und vorzugsweise über einen A/D-Wandler 24 als angepasste Rückführungsgröße y'(t) dem Regler 16 bzw. einem Addierer 26 zugeführt, der daraus und aus einem Sollwert (Führungsgröße) w(t) eine Regeldifferenz e(t) = w(t) - y(t) für den Regler 16 erzeugt. Mit z(t) ist noch eine Störgröße eingezeichnet, bei der es sich um (mindestens) eine von außen auf das System einwirkende Größe, wie z. B. die Außentemperatur (äußere Umgebungstemperatur) handelt. So erzeugt der Fahrtwind höhere Wärmeverluste. Es kann auch bereichsweise ein Wärmestau auftreten. Zudem kann es zu temperaturabhängigen Schwankungen des Widerstandes der Heizelemente

kommen ($R_{min}/R_{max}$).

Die Regelgröße des Leistungsreglers (Reglereinheit 6) ist die Heizleistung. Als Führungsgröße/Sollwert (Kennfeld) w(t) bzw. zu deren Festlegung können wahlweise folgende Größen verwendet werden (ggf. in teilweiser Kombination):

- effektive Spannung

- Temperatur des Heizelementes, des Fluids, der Fluidleitung und/oder des Leitungsverbinders

- eine vorgegebene Auftauzeit (insbesondere im Kombination mit der effektiven Spannung)

- Heizleistung

- Widerstand des Heizelementes ($R_{min}/R_{max}$)

- geometrische Parameter (Heizelement: Art, Material, Anzahl, Durchmesser und Länge von Heizleitern)

- Umgebungstemperatur

- Betriebstemperatur des Fluidsystems.

Der Ausgang der Regelstrecke 20 wird konstant gehalten. Es handelt sich somit um das Prinzip einer Festwertregelung, wobei die Führungsgröße w(t) fest vorgegeben wird. Durch die Verwendung eines Festwertreglers ist es vorteilhafterweise möglich, bei Änderungen im Bereich des Fluid-Leitungssystems 1 bzw. bei Änderungen im Bereich der Wärmeübertragung zwischen Heizelement und Leitungssystem durch Ändern von nur einem Parameter, und zwar der Führungsgröße w(t), den Regler anzupassen.

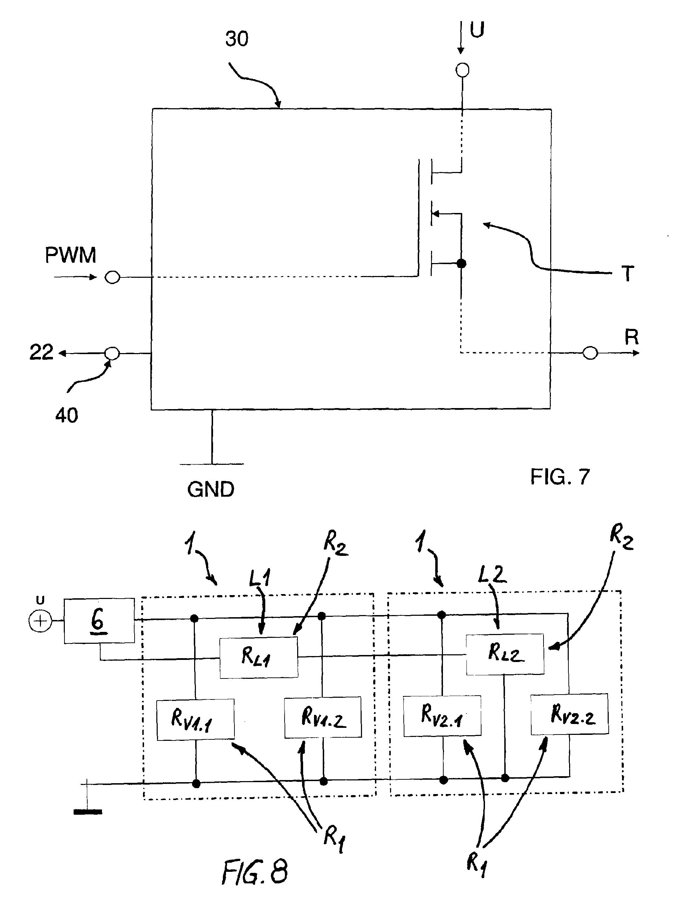

In Fig. 5 ist beispielhaft ein Blockschaltbild einer Regelung für drei Heizelemente veranschaulicht, die selbst in Fig. 5 nicht dargestellt, sondern über ein Steckverbindungsteil 28 anschließbar sind. Für jedes Heizelement ist eine Treiberschaltung 30 (30.1, 30.2 und 30.3) mit dem jeweiligen Steuerglied $T_1$, $T_2$, $T_3$ vorgesehen. Jede Treiberschaltung 30 kann mit dem jeweiligen Steuerglied $T_1$, $T_2$, bzw. $T_3$ als so genannter "High-Side-Driver" ausgeführt sein (vgl. Fig. 7). Der Mikrocontroller 14 enthält für jede Treiberschaltung 30 einen eigenen PWM-Modulator 18.1, 18.2, 18.3. Jede Treiberschaltung 30 ist bei dem dargestellten Beispiel über einen Sensor 22.1, 22.2, 22.3 mit einem eigenen Eingang ADC des Mikrocontrollers 14 verbunden. Alternativ ist aber auch ein Multiplexer-Betrieb über einen gemeinsamen Eingang ADC möglich. Die Versorgungsspannung U wird über einen Spannungsregler 32 in eine Speisespannung von insbesondere 5V umgeformt und dem Mikrocontroller 14 zugeführt. Weiterhin wird die Versorgungsspannung U auch allen Treiberschaltungen 30 zugeführt. Zusätzlich ist ein Spannungsteiler 34 zur Überwachung der Versorgungsspannung U und zum Detektieren der Eingangsspannungshöhe vorgesehen, da diese ja in verschiedenen Fahrzeugen unterschiedlich hoch sein kann. Mit den Treiberschaltungen 30 wird die Heizleistung jedes Heizelementes gesteuert.

Wie sich weiterhin aus Fig. 5 ergibt, ist der Mikrocontroller 14 zusätzlich mit einer Konstantstromquelle 36 verbunden, deren Ausgang über eine Schalteinrichtung 38 wahlweise einzeln auf jedes Heizelement geschaltet werden kann.

In Fig. 7 ist eine der Treiberschaltungen 30 stark vereinfacht dargestellt. Dazu sei bemerkt, dass die Treiberschaltung einen speziellen Ausgang 40 für ein dem jeweiligen Betriebsstrom des Heizelementes proportionales Sensorsignal aufweist, welches dem Sensor 22 zugeführt wird.

Im Folgenden soll die Funktion der Regelung genauer erläutert werden.

Zur Ermittlung des jeweils erforderlichen Tastverhältnisses m wird einerseits einmalig zur Initialisierung bei Betriebsbeginn sowie andererseits zyklisch während des Betriebs in jeweils einem Messzyklus für jedes Heizelement $R_1$ bis $R_3$ separat dessen aktueller Widerstand R(T) ermittelt und daraus mit der jeweils anliegenden Versorgungsspannung U das für die jeweils vorgegebene Soll-Heizleistung $P_{soll}$ erforderliche PWM-Tastverhältnis m ermittelt. Dazu wird in jedem Messzyklus bei vorübergehend ausgeschaltetem Betriebsstrom $I_1$ bis $I_3$ ein bestimmter Konstantmessstrom $I_M$ aus der Konstantstromquelle 36 über die Schalteinrichtung 38 durch das jeweilige Heizelement geführt. Die daraus resultierende Spannung $U_M$ wird über einen Operationsverstärker 42 auf einen ADC-Eingang des Mikrocontrollers 14 geführt und dient der Auswertung der aktuellen Leistungsdaten. Aus dem Konstantmessstrom und dem zugehörigen Spannungsabfall kann der aktuelle Widerstand nach dem Ohm'schen Gesetz

$$R(T) = \frac{U_M}{I_M}$$

bestimmt werden. Es kann dann das für die jeweils gewünschte Soll-Heizleistung $P_{soll}$ erforderliche PWM-Tastverhältnis m aus dem Produkt Soll-Heizleistung mal aktueller Widerstand dividiert durch das Quadrat der Versorgungsspannung bestimmt werden; es gilt

$$m = P_{Soll} \cdot \frac{R(T)}{U^2}$$

Im Anschluss an jeden Messzyklus wird für jedes Heizelement $R_n$ die Betriebsspannung mit dem so ermittelten Tastverhältnis $m_n$ erzeugt: $U_n = m_n \cdot U$.

Der oben erwähnte Ausgang 40 jeder Treiberschaltung 30 liefert dann im Betrieb ein Stromsignal, welches einen zum jeweiligen Betriebsstrom (Istwert) proportionalen Referenzstrom darstellt. Der nachgeschaltete Sensor 22 integriert diesen Referenzstrom zur Erzeugung eines Spannungsmittelwertes. Allerdings kann alternativ der Spannungsmittelwert auch berechnet werden. Aus diesen Werten kann dann der Istwert der jeweiligen Heizleistung mit $P_{Ist} = m_n \cdot I^2_n \cdot R(T)$ bestimmt werden. Die Regelung regelt dann durch Variation des Tastverhältnisses m den Istwert auf die vorgegebene Soll-Heizleistung.

Wie sich noch aus den Diagrammen in Fig. 9 ergibt, werden vorzugsweise die Heizelemente bezüglich der PWM-Steuerung derart zeitversetzt angesteuert, dass sich ihre PWM-Signale (vgl. in Fig. 9 die Spannungsimpulse $U_1$, $U_2$ und $U_3$) nicht oder nur teilweise zeitlich überlappen. So kann beispielsweise vorgesehen sein, die Heizelemente $R_1$ und $R_3$ mit den Betriebsspannungen $U_1$ und $U_3$ in den Pausenzeiten der Ansteuerung des Heizelementes $R_2$ bzw. dessen Betriebsspannung $U_2$ anzusteuern, wobei abweichend von der Darstellung in Fig. 9 auch die Spannungsimpulse $U_1$ und $U_3$ der Teil-Diagramme b) und c) relativ zueinander zeitlich versetzt innerhalb der Pause von $U_2$ gemäß Diagramm a) liegen können (s. den beispielhaft in Diagramm b) schraffiert und gestrichelt angedeuteten Spannungsimpuls für $U_1$). Durch diese Maßnahme wird der maximale Gesamtstrom des Heizsystems vorteilhaft gering gehalten.

Wie beispielhaft in Fig. 8 dargestellt ist, können die Heizelemente $R_1$, $R_2$ jeweils aus mehreren Einzel-Heizelementen bestehen, die in Reihe und/oder parallel geschaltet sein können. Beispielhaft sind in Fig. 8 zwei Heizelemente $R_{L1}$ und $R_{L2}$ von zwei verschiedenen Leitungen $L_1$ und $L_2$ in Reihe geschaltet, so dass sie gemeinsam von der Reglereinheit 6 angesteuert werden. Weiterhin sind bei diesem Beispiel die Heizelemente $R_{V1.1}$, $R_{V1.2}$, $R_{V2.1}$ und $R_{V2.2}$ aller Leitungsverbinder parallel geschaltet und werden demnach ebenfalls gemeinsam von der Reglereinheit 6 angesteuert. Es kann sich aber bei jedem einzelnen von der Reglereinheit 6 angesteuerten Zweig auch um eine beliebige andere Parallel- und/oder Reihenschaltung von jeweils mindestens zwei Einzel-Heizelementen handeln.

Weiterhin sind bevorzugt Mittel zur Überwachung der Höhe der Versorgungsspannung U und zur automatischen Anpassung der Regelung an die jeweilige Versorgungsspannung U vorgesehen.

Im Folgenden sollen hinsichtlich der erfindungsgemäßen Regelung noch weitere vorteilhafte Möglichkeiten erläutert werden.

In der Reglereinheit 6 kann - insbesondere in Form einer gespeicherten Tabelle - ein Kennfeld zur Bestimmung des Sollwertes hinterlegt sein. Dieses Kennfeld kann aus den Parametern Heizleistung, Umgebungstemperatur, Betriebstemperatur des FluidSystems, bestimmten geometrischen Parametern, der vorgegebenen Auftauzeit und/oder dergleichen bestehen. Zudem kann in dem Kennfeld auch eine Temperaturänderungsgeschwindigkeit (dT/dt), eine Widerstandänderungsgeschwindigkeit (dR/dt) und/oder eine Geometrieänderungsgeschwindigkeit (beispielsweise ds/dt) hinterlegt sein. Letzteres berücksichtigt insbesondere Volumenänderungen des Fluids beim Gefrieren oder Auftauen, indem durch geeignete Sensoren eine axiale und/oder radiale Wegänderung erfasst wird.

Vorteilhafte Möglichkeiten für eine solche Sensorik zur Bestimmung des Aggregatzustandes eines Mediums in einer Fluid-Leitung sollen wie folgt beispielhaft beschrieben werden.

Die Veröffentlichung WO 2009/040223 A2 beschreibt eine Anschlussvorrichtung in Form einer Leitungs-Steckverbindung mit derart ausgebildeten Haltemitteln, dass ein eingesteckter und arretierter Steckabschnitt ausgehend von einer Normalbetriebsposition zur Vergrößerung eines innerhalb eines Anschlussteils mit dem Medium beaufschlagten Innenvolumens über einen bestimmten Weg hinweg gegen eine Rückstellkraft relativ dem Anschlusteil bewegbar ist. So kann also das gefrierende Medium (z. B. Harnstofflösung) sich ausdehnen. Um hierbei erkennen zu können, ob das Medium gefroren ist oder nicht bzw. ob die Medienleitung einsatzbereit ist oder nicht, können elektrische Messmittel integriert werden, um eine Auswertung des Aggregatzustandes des durchströmenden Mediums vornehmen zu können.

Da sich das gefrierende Medium ausdehnt, kann eine Wegmessung integriert werden. Dies kann beispielsweise über den so genannten Wiegand-Effekt, über Piezoelemente (kapazitive Sensoren), mit Hallgebern (induktive Sensoren) oder aber auch über einen aktiven Schwingkreis (aktive Sensoren) erfolgen. Ferner kann auch ein Lichtsignal (Lasersignal) mittels eines Glasfaserkabels in die Anschlussvorrichtung eingespeist werden, um damit eine Reflexionsänderung zu messen. Auch ist es denkbar, mit Dehnungsmessstreifen die Wegänderung zu messen.

1. Piezoelement

Es werden Piezoelemente angebracht, die so angeordnet sind, dass diese bei einer axialen Wegänderung durch die Volumenausdehnung des gefrorenen Mediums elastisch verformt werden.

2. Hallsensor

Die Wegmessung erfolgt über mindestens einen Hallsensor. Durch die Volumenänderung des Mediums wird die axiale Wegänderung gemessen.

3. Dehnungsmessstreifen (DMS)

Diese Dehnungsmessstreifen werden so angebracht, dass eine axiale/radiale Volumenausdehnung (Wegänderung) messbar ist.

4. Wiegand-Sensor

Ein Wiegand-Draht ist als Federelement ausgeführt, wodurch der Wiegand-Effekt erzeugt wird. Das Federelement hält einen Kolben gegen den Betriebsdruck des fluiden Mediums in einer stabilen Lage, kann alternativ auch als Zusatzfeder angebracht sein.

Der Wiegand-Draht besteht aus einer speziellen Legierung:

- Mantel: hartmagnetisches Metall
- Kern: weichmagnetisches Metall

Es kommt zu einer sprunghaften Ummagnetisierung des Kerns. Dieser Ummagnetisierungsspannungspuls kann mit Hilfe einer Spule, die den Wiegand-Draht umgibt, gemessen und damit der Aggregatzustand des Fluid ausgewertet werden.

5. Einleitung von Lichtsignalen/Laserimpuls; Sensorik mittels Licht-Dispersion

Der Verbinder ist im Schaftbereich zur Fluidleitung lasertransparent, so dass mit einem Laser direkt in das Medium durch den Schaft des Verbinders gepulst und damit die Reflexion des Mediums, die Ablenkung des Lichts bzw. das Durchtreten des Lichts bis auf die andere Seite des Verbinders in Empfänger (Lichtsensoren), die radial am Schaft des Verbinders angeordnet sind, gemessen und somit der Aggregatzustand des Mediums (gefroren, flüssig) bzw. das Nichtvorhandensein des Mediums festgestellt werden kann.

6. Aktiver Schwingkreis, Sensorik mittels Frequenzänderung

Es werden eine Spule als Sender und eine zweite Spule als Empfänger so angeordnet, dass das Medium zwischen diesen Spulen ist. Es wird eine Frequenz auf die Sendespule gegeben, wodurch ein elektromagnetisches Feld erzeugt wird. Dieses erzeugte Feld (die Feldstärke) wird vom Empfänger aufgenommen. Mit den verschiedenen Aggregatzuständen sind auch die Feldstärkenänderungen messbar und auswertbar.

Weiterhin kann durch eine empirische Formel als Funktion der Temperatur (im Heizelement) und der Zeit oder der Änderungsgeschwindigkeit der Heizelement-Widerstandswerte ($dR/dt \neq 0$) oder über ein entsprechendes Kennfeld bestimmt werden, ob das gefrorene Fluid aufgetaut ist bzw. ob überhaupt ein Fluid vorhanden ist und die Fluid-Leitung einsatzbereit ist.

Es kann eine Überwachung des PWM-Tastverhältnisses m über die Zeit erfolgen. Bleibt das PWM-Tastverhältnis m über eine bestimmte Zeit in einem gewissen Bereich konstant, d. h. die Heizleistung bleibt konstant und schließlich die Temperatur im Heizelement, da der Widerstand des Heizelementes bzw. die Änderungsgeschwindigkeit der Widerstandswerte konstant bleibt, kann über ein Kennfeld bestimmt werden, ob das gefrorene Medium aufgetaut ist bzw. ob ein Medium vorhanden und aufgetaut ist und die Fluid-Leitung einsatzbereit ist.

Weiterhin kann optional ein Temperaturfühler für die Außen-/Umgebungstemperatur und/oder für die Innentemperatur im Fluid und/oder ein geeigneter Sensor zur Erfassung einer Fluid-Volumenänderung beispielsweise durch eine Wegmessung integriert werden, um davon abhängig verschiedene Parameter für die Regelung vorzugeben und beispielsweise die Heiztemperatur konstant zu halten.

Es besteht weiterhin die vorteilhafte Möglichkeit, das jeweilige Fluid zu erkennen und zu bestimmen. Dazu kann das Auftauverhalten des jeweiligen Mediums über ein in der Reglereinheit abgelegtes Kennfeld beschrieben sein, beispielsweise über die Temperaturänderung und Zeitdifferenz. Durch einen Vergleich mit diesem gespeicherten Kennfeld kann erkannt werden, um welches Medium es sich handelt, beispielsweise ob es tatsächlich ein SCR-Medium (wässrige Harnstofflösung) ist oder nicht. Durch diese vorteilhafte Maßnahme kann eine eventuelle Falsch-Betankung des Fahrzeugs erkannt werden.

Weiterhin kann eine mittelbare Temperaturmessung erfolgen. Anhand der Daten des Heizelementes (elektrischer Widerstand und geometrische Daten, beispielsweise Durchmesser bzw. Querschnitt und Länge eines Heizleiters) und einer durch eine Konstant-Stromquelle gewonnenen Spannung am Widerstand des Heizelementes kann die aktuelle Temperatur bzw. ein Temperaturbereich im Heizelement berechnet werden (über den temperaturabhängigen Widerstand).

Das erfindungsgemäße Heizsystem kann mit Vorteil in ein "On-Board-DiagnoseSystem" (OBD) einbezogen werden. Dazu kann das erfindungsgemäße System, insbesondere die Reglereinheit 6, an einen so genannten CAN-BUS (Schnittstelle zur OBD) angebunden sein. Über diese Anbindung lässt sich die Temperatur über eine ID einlesen, um davon abhängig verschiedene Parameter bzw. über eine Kennfeld-Abfrage die Leistungszufuhr für die Regelung vorzugeben und beispielsweise die Heiztemperatur konstant zu halten oder auch die Heizung abzuschalten, um in bestimmten Betriebszuständen Energie einzusparen. Vorteilhafterweise führt hierbei die erfindungsgemäße Regelung selbstständig eine Funktionsprüfung und Fehlerdiagnose der Leitung durch und gibt die Information an die OBD-Unit mittels CAN-BUS weiter, ob die Leitung einsatzbereit ist oder nicht. Dies bedeutet, dass die OBD kein Signal an den Regler für den Start der Funktionsprüfungen der Leitung abgibt, vielmehr führt dies das erfindungsgemäße Heizsystem bzw. die Reglereinheit selbst aus.

Hinsichtlich der oben erläuterten PWM-Ansteuerung ist ergänzend zu erwähnen, dass ein bevorzugtes PWM-Frequenzband aufgrund der thermischen Trägheit des Systems im Bereich von 0,1 Hz bis 1 kHz liegt. Hierbei wird bevorzugt eine Periodendauer von 50 ms, also eine Frequenz von 20 Hz vorgegeben.

Aufgrund der erfindungsgemäßen Regelung können alle Heizelemente (bei allen Komponenten des Fluid-Leitungssystems 1, insbesondere bei den Leitungsverbindern $V_1$, $V_2$) gleich, d. h. mit gleichen Eigenschaften/Werten, ausgebildet sein, weil die Heizleistung über die Regelung individuell eingestellt werden kann. Somit können die Heizelemente insbesondere der Leitungsverbinder stets beispielsweise aus dem gleichen Heizleiter-Material bestehen und somit unabhängig hergestellt werden.

Im Rahmen des erfindungsgemäßen Systems können zusätzliche Sensoren verwendet werden:

- Innen-/Außen-Temperatursensoren

- Innen-/Außen-Drucksensoren (insbesondere Dehnungsmessstreifen zur Erfassung einer Volumen- bzw. Druckänderung beim Einfrieren oder Auftauen des Fluids)

- Temperaturschalter zur Auftau-/Einfrier-Erkennung, wobei ein beliebiges Referenzmedium (Harnstofflösung oder anderes) sich außerhalb der Fluidleitung in einem hermetisch dichten Gefäß befindet, wobei dieses Gefäß mit einer Druckdose verbunden ist. Die Druckdose betätigt einen Schaltkontakt.

- Temperaturabhängige Widerstandsmessung

- Widerstandsänderungsgeschwindigkeit dR/dt

Das erfindungsgemäße System arbeitet verlustleistungsoptimiert, der Regler benötigt keinen Kühlkörper.

Durch den Regler kann eine Fehlererkennung und Fehlerauswertung bezüglich des Leitungssystems und insbesondere eine Rückmeldung an die OBD-Unit erfolgen, insbesondere zur Erkennung, ob das System funktionsfähig ist. Hierbei werden beispielsweise folgende Kriterien berücksichtigt:

- Leitung defekt (Kurzschluss, Übertemperatur im Treiber)
- Leitung zu heiß
- Leitung wird nicht warm

- Kein Fluid in der Leitung
- Batteriespannung außerhalb eines bestimmten Arbeitsbereiches
- Sensorsignal außerhalb eines Arbeitsbereiches
- Widerstandswerte außerhalb eines Betriebsbereiches

Aufgrund der Ansteuerung der Heizelemente mit PWM-Impulsen sollten Maßnahmen zur EMV (Elektromagnetische Verträglichkeit) vorgesehen sein:

- Verwendung von geschirmten Leitungen/Kabeln

- Abgeschirmtes Gehäuse für die Regelung

    o Werkstoff des Gehäuses selbst ist elektrisch leitend

    o metallische Folie (z. B. Alu) in das Gehäuse einbringen (Auskleben, Auskleiden)

- Abschirmung um alle Heizelemente, d. h. im Bereich des Leitungsmantels 4 und im Bereich der Gehäuse 2 der Leitungsverbinder, wobei diese Abschirmung verklebt oder nicht verklebt und ausgebildet sein kann als

    ○ Drahtgeflecht

    ○ Foliengeflecht

    ○ (gewickelte, ggf. selbstklebende) Folie, die zweckmäßigerweise auch als Hitzeschutz verwendet werden kann

- die Abschirmung kann zur Fixierung des Heizelementes insbesondere im Bereich der Fluidleitung genutzt werden.


**Patentansprüche**

1.  Verfahren zum Beheizen eines Fluid-Leitungssystems (1) mit mindestens zwei elektrischen Heizelementen ($R_1$, $R_2$, $R_3$), wobei
die Heizelemente ($R_1$, $R_2$, $R_3$) elektrisch parallel betrieben werden und jedes Heizelement ($R_1$ / $R_2$/ $R_3$) separat mit einem zur Einstellung seiner Heizleistung gesteuerten Betriebsstrom ($I_1$/$I_2$/$I_3$) versorgt wird, **dadurch gekennzeichnet, dass** jedes Heizelement ($R_1$ / $R_2$ / $R_3$) separat mit einer eigenen Betriebsspannung ($U_1$ / $U_2$ / $U_3$) versorgt wird, wobei jede Betriebsspannung ($U_1$ /$U_2$/ $U_3$) aus einer Versorgungsspannung (U) durch eine zur Regelung der Heizleistung mit einem bestimmten Tastverhältnis (m) getaktete PWM-Steuerung erzeugt wird, wobei der jeweilige Betriebsstrom ($I_1$/$I_2$/$I_3$) aus einem Effektivwert der getakteten Betriebsspannung ($U_1$ $U_2$/ $U_3$) und einem jeweils aktuellen Widerstand (R(T)) des Heizelementes ($R_1$, $R_2$, $R_3$) resultiert.

2.  Verfahren nach Anspruch 1,
**dadurch gekennzeichnet, dass** die jeweilige Ist-Heizleistung ($P_{Ist}$) jedes Heizelementes ($R_1$ / $R_2$ / $R_3$) durch Variation des PWM-Tastverhältnisses (m) auf eine vorgegebene Soll-Heizleistung ($P_{soll}$) geregelt wird.

3.  Verfahren nach Anspruch 1 oder 2,
**dadurch gekennzeichnet, dass** einmalig zur Initialisierung bei Betriebsbeginn sowie anschließend zyklisch während des Betriebs in jeweils einem Messzyklus für jedes Heizelement ($R_1$ - $R_3$) dessen aktueller Widerstand R(T) und daraus das für die jeweils vorgegebene Soll-Heizleistung ($P_{soll}$) erforderliche PWM-Tastverhältnis (m) ermittelt werden.

4.  Verfahren nach Anspruch 3,
**dadurch gekennzeichnet, dass** in jedem Messzyklus bei vorübergehend ausgeschaltetem Betriebsstrom ($I_1$/$I_2$/$I_3$) ein bestimmter Konstantmessstrom ($I_M$) durch das jeweilige Heizelement ($R_1$ / $R_2$ / $R_3$) geführt, ein daraus resultierender Spannungsabfall ($U_M$) ermittelt und dann aus diesen Werten der aktuelle Widerstand (R(T) = $U_M$ /$I_M$) bestimmt wird.

5.  Verfahren nach einem der Ansprüche 1 bis 4,
**dadurch gekennzeichnet, dass** die Heizelemente ($R_1$-$R_3$) bezüglich der PWM-Steuerung derart zeitversetzt angesteuert werden, dass sich ihre PWM-Signale nicht oder nur teilweise zeitlich überlappen.

6. Heizsystem für ein Fluid-Leitungssystem (1) mit mindestens zwei elektrischen Heizelementen ($R_1$, $R_2$, $R_3$), insbesondere zur Anwendung des Verfahrens nach einem der vorhergehenden Ansprüche, wobei
die Heizelemente ($R_1$ - $R_3$) elektrisch parallel geschaltet und mit jeweils einem separaten Steuerglied ($T_1$, $T_2$, $T_3$) verbunden sind, wobei jedes Heizelement ($R_1$ / $R_2$ / $R_3$) über sein zugehöriges Steuerglied ($T_1$ / $T_2$ / $T_3$) zur individuellen Einstellung seiner Heizleistung steuerbar ist
**dadurch gekennzeichnet, dass** die Steuerglieder ($T_1$ - $T_3$) von einer Reglereinheit (6) zur Regelung der Heizleistungen der einzelnen Heizelemente ($R_1$, $R_2$, $R_3$) angesteuert werden,
wobei jedes Steuerglied ($T_1$ - $T_3$) von einem Transistor gebildet und über eine Treiberschaltung (30.1 - 30.3) von der Reglereinheit (6) ansteuerbar ist,
und wobei jede Treiberschaltung (30) über einen Pulsweitenmodulator (18) mit einem zur Einstellung der Heizleistung variierbaren Tastverhältnis (m) angesteuert wird.

7. Heizsystem nach Anspruch 6,
**dadurch gekennzeichnet, dass** wenigstens eines der Heizelemente ($R_1$, $R_2$) aus mehreren in Reihe und/oder parallel geschalteten Einzel-Heizelementen ($R_{L1}$, $R_{L2}$; $R_{V1.1}$, $R_{V1.2}$, $R_{V2.1}$, $R_{V2.2}$) besteht.

8. Heizsystem nach Anspruch 6 oder 7,
**dadurch gekennzeichnet, dass** die Reglereinheit (6) innerhalb eines im Bereich einer Leitung (L) und/oder eines Leitungsverbinders ($V_1$; $V_2$) angeordneten Anschlussgehäuses (8) untergebracht ist.

9. Heizsystem nach einem der Ansprüche 6 bis 8,
**dadurch gekennzeichnet, dass** die Reglereinheit (6) aus einem Mikrocontroller (14) besteht, der für jedes zu regelnde Heizelement ($R_1$ - $R_3$) das Tastverhältnis (m) des PWM-Modulators (18) einstellt.

10. Heizsystem nach einem der Ansprüche 6 bis 9,
**dadurch gekennzeichnet, dass** die Reglereinheit (6) eine Konstantstromquelle (36) mit einer nachgeschalteten Schalteinrichtung (38) aufweist, über die in einem Messzyklus bei ausgeschaltetem Betriebsstrom ($I_1$ - $I_3$) ein Konstantmessstrom ($I_M$) durch jedes Heizelement ($R_1$ - $R_3$) führbar ist, wobei die Reglereinheit (6) so ausgelegt ist, dass anhand des Konstantmessstroms ($I_M$) und einer dadurch an dem jeweiligen Heizelement ($R_1$ - $R_3$) abfallenden Spannung ($U_M$) der jeweils aktuelle Widerstand ($R(T)$) des Heizelementes ($R1$ - $R_3$) ermittelt wird, wobei im nachfolgenden Betrieb für jedes Heizelement ($R_1$ - $R_3$) anhand der Betriebsspannung ($U_1$ - $U_3$) oder des resultierenden Betriebsstromes ($I_1$ - $I_3$) und des im vorhergehenden Messzyklus ermittelten Widerstandes ($R(T)$) die jeweilige Heizleistung ($P_{Ist}$) als Istwert bestimmt wird.

11. Heizsystem nach Anspruch 10,
**dadurch gekennzeichnet, dass** die Reglereinheit (6) durch Vergleich des Istwertes der jeweiligen Heizleistung ($P_{Ist}$) mit einem vorgegebenen Sollwert ($P_{Soll}$) und durch Variation des PWM-Tastverhältnisses (m) den Istwert auf den Sollwert regelt.

**Claims**

1. Method for heating a fluid line system (1) with at least two electric heating elements ($R_1$, $R_2$, $R_3$), wherein the heating elements ($R_1$, $R_2$, $R_3$) are operated electrically in parallel and each heating element ($R_1$/$R_2$/$R_3$) is separately supplied with a controlled operating current ($I_1$/$I_2$/$I_3$) for adjusting its heating power,
**characterized in that** each heating element ($R_1$/$R_2$/$R_3$) is separately supplied with its own operating voltage ($U_1$/$U_2$/$U_3$), wherein each operating voltage ($U_1$/$U_2$/$U_3$) is generated from a supply voltage (U) by means of a PWM control clocked to regulate the heating power with a defined duty factor (m), wherein the respective operating current ($I_1$/$I_2$/$I_3$) results from an effective value of the clocked operating voltage ($U_1$/$U_2$/$U_3$) and a respective present resistance ($R(T)$) of the heating element ($R_1$/$R_2$/$R_3$).

2. Method according to claim 1,
**characterized in that** the respective actual heating power ($P_{actual}$) of each heating element ($R_1$/$R_2$/$R_3$) is regulated by varying the PWM duty factor (m) to a predefined desired heating power ($P_{desired}$).

3. Method according to claim 1 or 2,

**characterized in that**, once for the initialization at the start of operation and then subsequently cyclically during operation in one measuring cycle each, the present resistance R(T) for each heating element ($R_1$ - $R_3$) is determined, and from this the PWM duty factor (m) is determined for the respectively predefined desired heating power ($P_{desired}$).

4. Method according to claim 3,
**characterized in that** each measuring cycle with the operating current ($I_1/I_2/I_3$) temporarily switched off, a defined constant measuring current ($I_M$) is sent through the respective heating element ($R_1/R_2/R_3$), a resulting voltage drop ($U_M$) is calculated, and the present resistance ($R(T) = U_M/I_M$) is then determined from these values.

5. Method according to any one of claims 1 to 4,
**characterized in that** the heating elements ($R_1$ - $R_3$) are driven at a time offset with respect to the PWM control, such that their PWM signals do not, or only partly overlap in time.

6. Heating system for a fluid line system (1) with at least two electric heating elements ($R_1$, $R_2$, $R_3$), in particular for the application of the method according to one of the preceding claims,
wherein the heating elements ($R_1$ - $R_3$) are connected electrically in parallel and each to a separate control element ($T_1$, $T_2$, $T_3$), wherein each heating element ($R_1/R_2/R_3$) is controllable via its associated control element ($T_1/T_2/T_3$) for the individual adjustment of its heating power,
**characterized in that** the control elements ($T_1$ - $T_3$) are driven by a regulating unit (6) for regulating the heating power of the individual heating elements ($R_1$, $R_2$, $R_3$), wherein each control element ($T_1$ - $T_3$) is formed by a transistor and is drivable via a driver circuit (30.1 - 30.3) of the regulating unit (6), and wherein each driver circuit (30) is driven via a pulse width modulator (18) with a variable duty factor (m) for the adjustment of the heating power.

7. Heating system according to claim 6,
**characterized in that** at least one of the heating elements ($R_1$, $R_2$) consists of a plurality of individual heating elements ($R_{L1}$, $R_{L2}$; $R_{V1.1}$, $R_{V1.2}$, $R_{V2.1}$, $R_{V2.2}$) connected in series and/or in parallel.

8. Heating system according to claim 6 or 7,
**characterized in that** the regulating unit (6) is housed in a connection housing (8) arranged in the region of a line (L) and/or a line connector ($V_1$; $V_2$).

9. Heating system according to any one of claims 6 to 8, **characterized in that** the regulating unit (6) consists of a microcontroller (14) which adjusts the duty factor (m) of the PWM modulator (18) for each of the heating elements ($R_1$ - $R_3$) to be regulated.

10. Heating system according to any one of claims 6 to 9, **characterized in that** the regulating unit (6) has a constant power supply (36) with a downstream switching device (38), via which a constant measuring current ($I_M$) can be sent through each heating element ($R_1$ - $R_3$) in one measuring cycle with the operating current ($I_1$ - $I_3$) switched off, wherein the regulating unit (6) is designed such that based on the constant measuring current ($I_M$) and a thereby decreasing voltage ($U_M$) applied to the respective heating element ($R_1$ - $R_3$), the respectively present resistance (R(T)) of the heating element ($R_1$ - $R_3$) is calculated, wherein during subsequent operation, the respective heating power ($P_{actual}$) is determined as the actual value for each heating element ($R_1$ - $R_3$) based on the operating voltage ($U_1$ - $U_3$) or on the resulting operating current ($I_1$ - $I_3$) and on the resistance (R(T)) calculated in the preceding measuring cycle.

11. Heating system according to claim 10,
**characterized in that** the regulating unit (6) regulates the actual value to the desired value by comparing the actual value of the respective heating power ($P_{actual}$) with a predefined desired value ($P_{desired}$) and by varying the PWM duty factor (m).

**Revendications**

1. Procédé servant à réchauffer un système de conduite de fluide (1) comportant au moins deux éléments de chauffage (R1, R2, R3) électriques, dans lequel les éléments de chauffage (R1, R2, R3) fonctionnent en parallèle de manière électrique et chaque élément de chauffage (R1/R2/R3) est alimenté séparément en un courant de service (I1/I2/I3) commandé afin de régler la puissance de chauffage,
**caractérisé en ce que** chaque élément de chauffage (R1/R2/R3) est alimenté séparément en une tension de service (U1/U2/U3) propre, dans lequel chaque tension de service (U1/U2/U3) est générée à partir d'une tension d'alimentation (U) par une commande à modulation de largeur d'impulsion synchronisée aux fins du réglage de la puissance de chauffage à un certain taux d'impulsions (m), dans lequel le courant de service (I1/I2/I3) respectif résulte d'une valeur effective de la tension de service (U1/U2/U3) synchronisée et d'une résistance (R(T)) respective du moment de l'élément de chauffage (R1, R2, R3).

2. Procédé selon la revendication 1,
**caractérisé en ce que** la puissance de chauffage réelle respective (Préelle) de chaque élément de chauffage (R1/R2/R3) est réglée par la variation du taux d'impulsions (m) à modulation de largeur d'impulsion sur une puissance de chauffage de consigne (Pde consigne) prédéfinie.

3. Procédé selon la revendication 1 ou 2,
**caractérisé en ce que** la résistance R(T) du moment d'un élément de chauffage ainsi qu'en résultante le taux d'impulsions (m) à modulation de largeur d'impulsion requis pour la puissance de chauffage de consigne (Pde consigne) respectivement prédéfinie sont déterminés une fois aux fins de l'initialisation en début de fonctionnement, ainsi qu'immédiatement après, de manière cyclique, au cours du fonctionnement, lors d'un cycle de mesure respectif pour chaque élément de chauffage (R1-R3).

4. Procédé selon la revendication 3,
**caractérisé en ce que** lors de chaque cycle de mesure, pour un courant de service (I1/I2/I3) mis hors service de manière temporaire, un certain courant de mesure constant (IM) est guidé à travers l'élément de chauffage (R1/R2/R3) respectif, **en ce qu'**une chute de tension (UM) en résultant est déterminée, puis **en ce que** la résistance (R(T)=UM/IM) du moment est déterminée à partir desdites valeurs.

5. Procédé selon l'une quelconque des revendications 1 à 4,
**caractérisé en ce que** les éléments de chauffage (R1-R3) sont commandés, en ce qui concerne la commande à modulation de largeur d'impulsion, avec un décalage temporel de telle manière que les signaux à modulation de largeur d'impulsion ne se chevauchent pas ou uniquement partiellement dans le temps.

6. Système de chauffage pour un système de conduite de fluide (1) comportant au moins deux éléments de chauffage (R1, R2, R3) électriques, en particulier pour appliquer le procédé selon l'une quelconque des revendications précédentes, dans lequel les éléments de chauffage (R1-R3) sont branchés électriquement en parallèle et sont reliés à respectivement un organe de commande (T1, T2, T3) séparé, dans lequel chaque élément de chauffage (R1/R2/R3) peut être commandé par l'intermédiaire de son organe de commande (T1/T2/T3) associé aux fins du réglage individuel de sa puissance de chauffage,
**caractérisé en ce que** les organes de commande (T1-T3) sont commandés par une unité de régulation (6) servant à régler les puissances de chauffage des divers éléments de chauffage (R1, R2, R3), dans lequel chaque organe de commande (T1-T3) est formé par un transistor et peut être commandé par l'unité de régulation (6) par l'intermédiaire d'un circuit d'attaque (30.1-30.3), et dans lequel chaque circuit d'attaque (30) est commandé par l'intermédiaire d'un modulateur de largeur d'impulsion (18) à un taux d'impulsions (m) pouvant varier aux fins du réglage de la puissance de chauffage.

7. Système de chauffage selon la revendication 6,
**caractérisé en ce qu'**au moins un des éléments de chauffage (R1, R2) se compose de plusieurs éléments de chauffage individuels (RL1, RL2 ; RV1.1, RV1.2, RV2.1, RV2.2) branchés en série et/ou en parallèle.

8. Système de chauffage selon la revendication 6 ou 7,
**caractérisé en ce que** l'unité de régulation (6) est logée à l'intérieur d'un boîtier de raccordement (8) disposé dans la zone d'une conduite (L) et/ou d'un connecteur de conduite (V1 ; V2).

9. Système de chauffage selon l'une quelconque des revendications 6 à 8,
**caractérisé en ce que** l'unité de régulation (6) se compose d'un microcontrôleur (14), qui règle pour chaque élément de chauffage (R1-R3) qui doit être réglé, le taux d'impulsions (m) du modulateur à largeur d'impulsion (18).

10. Système de chauffage selon l'une quelconque des revendications 6 à 9,
**caractérisé en ce que** l'unité de régulation (6) présente une source de courant constante (36) dotée d'un système de commutation (38) branché en aval, par l'intermédiaire duquel un courant de mesure constant (IM) peut être conduit à travers chaque élément de chauffage (R1-R3) lors d'un cycle de mesure pour un courant de service (I1-I3) mis hors service, dans lequel l'unité de régulation (6) est configurée de telle manière que la résistance (R(T)) respective du moment de l'élément de chauffage (R1-R3) est déterminée à l'aide du courant de mesure constant (IM) et d'une tension (UM) chutant de ce fait au niveau de l'élément de chauffage (R1-R3) respectif, dans lequel la puissance de chauffage (Préelle) respective est déterminée comme valeur réelle lors du fonctionnement qui suit pour chaque élément de chauffage (R1-R3) à l'aide de la tension de service (U1-U3) ou du courant de service (I1-I3) en résultant et de la résistance (R(T)) déterminée lors du cycle de mesure précédent.

11. Système de chauffage selon la revendication 10,
**caractérisé en ce que** l'unité de régulation (6) est réglée sur la valeur de consigne par comparaison de la valeur réelle de la puissance de chauffage (Préelle) respective avec la valeur de consigne (Pde consigne) prédéfinie et par la variation du taux d'impulsions (m) à modulation de largeur d'

FIG.1

FIG.2

FIG. 3

FIG. 4

FIG. 5

FIG.6

16

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4135082 C1
- WO 2007073286 A1
- EP 1985908 A1
- EP 1764541 A1
- DE 4034635 C1
- WO 2009040223 A2